(19) Europäisches Patentamt
European Patent Office
Office européen des brevets

(11) **EP 4 098 929 A1**

(12) **EUROPÄISCHE PATENTANMELDUNG**

(43) Veröffentlichungstag:
**07.12.2022 Patentblatt 2022/49**

(21) Anmeldenummer: **21177334.6**

(22) Anmeldetag: **02.06.2021**

(51) Internationale Patentklassifikation (IPC):
***F16P 3/14*** (2006.01)

(52) Gemeinsame Patentklassifikation (CPC):
**F16P 3/142; F16P 3/141; F16P 3/144; F16P 3/147**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Leuze electronic GmbH + Co. KG**
**73277 Owen/Teck (DE)**

(72) Erfinder:
• **Feller, Bernhard**
**86316 Friedberg (DE)**
• **Heckmayr, Alexander**
**86807 Buchloe (DE)**
• **Kretzschmar, Rolf**
**82275 Emmering (DE)**

(74) Vertreter: **Ruckh, Rainer Gerhard**
**Patentanwalt**
**Jurastrasse 1**
**73087 Bad Boll (DE)**

(54) **SENSORANORDNUNG UND VERFAHREN ZUM BETRIEB EINER SENSORANORDNUNG**

(57) Die Erfindung betrifft eine Sensoranordnung (1) mit wenigstens einem Sensor (2) zur Erfassung von Objekten in einem Überwachungsbereich, wobei Sensorsignale des wenigstens einen Sensors (2) wenigstens einer Verarbeitungseinheit mit einem KI(Künstliche Intelligenz)-Verarbeitungsalgorithmus (212, 222) zugeführt sind. Aus in der Verarbeitungseinheit generierten Verarbeitungsergebnissen wird als Gesamtergebnis ein Ausgangssignal der Sensoranordnung (1) generiert. Dem KI(Künstliche Intelligenz)-Verarbeitungsalgorithmus (212, 222) werden Testvektoren zugeführt, wodurch der KI(Künstliche Intelligenz)-Verarbeitungsalgorithmus (212, 222) Ausgangsvektoren generiert, welche mit vorgegebenen Ergebnisvektoren verglichen werden. Die Erfindung betrifft weiterhin ein entsprechendes Verfahren.

## Fig. 1

**Beschreibung**

Die Erfindung betrifft eine Sensoranordnung und ein Verfahren zum Betrieb einer Sensoranordnung.

Derartige Sensoranordnungen umfassen wenigstens einen Messwerte generierenden Sensor. Diese messenden Sensoren können beispielsweise von Flächendistanzsensoren, das heißt scannenden Distanzsensoren, oder auch Kamerasensoren ausgebildet sein.

Diese Sensoren können in unterschiedlichen industriellen Applikationen eingesetzt werden, wobei die Sensoren insbesondere Überwachungsfunktionen wahrnehmen, um Automatisierungsprozesse zu überwachen und zu kontrollieren. Die Funktionsweise eines derartigen Sensors ist derart, dass abhängig von den Messwerten in einem vorzugsweise im Sensor integrierten Sicherheitsmodul, insbesondere einem Überwachungsmodul, eine Sicherheitsfunktion, zum Beispiel eine Überwachungsfunktion, generiert wird, die generell auch eine Automatisierungsfunktion sein kann.

Beispielsweise kann aus Messwerten in Form von Positionswerten als Sicherheitsfunktion oder Automatisierungsfunktion Steuergrößen zur Steuerung eines fahrerlosen Transportfahrzeugs oder die Schutzfeldgröße für eine Überwachungsfunktion abgeleitet werden.

Insbesondere kann der Sensor als Sicherheitssensor ausgebildet sein, sodass die Sensoranordnung im Bereich der Sicherheitstechnik eingesetzt werden kann. Ein typischer Anwendungsfall ist eine Gefahrenbereichsüberwachung an einer gefahrbringenden Anlage, die insbesondere auch von einem Fahrzeug gebildet sein kann. In diesem Fall wird mit dem Sicherheitssensor ein Schutzfeld überwacht, das den Gefahrenbereich sichert. Im Fall einer Vorfeldüberwachung an einem fahrerlosen Transportfahrzeug muss das Schutzfeld an die aktuelle Fahrsituation angepasst werden.

Bei derartigen Sicherheitssensoren wird im Überwachungsmodul generell eine Sicherheitsfunktion generiert. Die Sicherheitsfunktion kann darin bestehen, eine zu überwachende Anlage abzuschalten, wenn im überwachten Schutzfeld ein Objekteingriff registriert wird. Dadurch wird die Anlage in einen sicheren Zustand überführt.

Eine weitere Sicherheitsfunktion kann eine automatische Schutzfeldumschaltung bei einer Schutzfeldüberwachung an einem fahrerlosen Transportfahrzeug sein, die abhängig von den aktuellen Messwerten des Sensors erfolgt.

Um Fehlfunktionen der Sensoranordnung auszuschließen, müssen die Berechnungsmethoden, mit denen aus Messwerten des Sensors Überwachungsfunktionen beziehungsweise Automatisierungsfunktionen generiert werden, zuverlässig sein. Bei Sensoranordnungen mit einem Sicherheitssensor sind diese Anforderungen noch erhöht, da für die Sensoranordnung und insbesondere den Sicherheitssensor hinsichtlich der Auswertung der Messwerte und der Generierung einer Sicherheitsfunktion eine hohe Fehlersicherheit gefordert wird.

Die Berechnungsmethoden und deren Überprüfung, die zur Generierung der Überwachungsfunktion beziehungsweise Sicherheitsfunktion eingesetzt werden, sind daher äußerst aufwändig.

Der Erfindung liegt die Aufgabe zugrunde eine Sensoranordnung bereitzustellen, die eine hohe Zuverlässigkeit aufweist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit wenigstens einem Sensor zur Erfassung von Objekten in einem Überwachungsbereich, wobei Sensorsignale des wenigstens einen Sensors wenigstens einer Verarbeitungseinheit mit einem KI(Künstliche Intelligenz)-Verarbeitungsalgorithmus zugeführt sind. Aus in der Verarbeitungseinheit generierten Verarbeitungsergebnissen wird als Gesamtergebnis ein Ausgangssignal der Sensoranordnung generiert. Dem KI(Künstliche Intelligenz)-Verarbeitungsalgorithmus werden Testvektoren zugeführt, wodurch der KI(Künstliche Intelligenz)-Verarbeitungsalgorithmus Ausgangsvektoren generiert, welche mit vorgegebenen Ergebnisvektoren verglichen werden.

Die Erfindung betrifft weiterhin ein entsprechendes Verfahren.

Die erfindungsgemäße Sensoranordnung dient generell zur Erfassung von Objekten in einem Überwachungsbereich. Anhand der Sensorsignale des oder der Sensoren wird ein Ausgangssignal generiert, das generell eine Information über das Vorhandensein eines Objekts im Überwachungsbereich liefert. Dabei kann das Ausgangssignal ein binäres Schaltsignal sein, dessen Schaltzustände angeben, ob sich ein Objekt im Überwachungsbereich befindet oder nicht. Generell können als Ausgangssignale auch Distanz- oder Positionswerte in Relation zu Objekten oder einem Objekt ausgegeben werden.

Gemäß einer besonders vorteilhaften Ausführungsform ist die Sensoranordnung eine Sicherheitssensoranordnung, welche zur Überwachung eines Gefahrenbereichs an einer Anlage ausgebildet ist. Die Funktion der Sicherheitssensoranordnung ist derart, dass diese bei Registrieren eines Objekteingriffs im Gefahrenbereich als Ausgangssignal eine Sicherheitsfunktion für die Anlage generiert. Insbesondere generiert die Sicherheitssensoranordnung ein binäres Schaltsignal, dessen Schaltzustände angeben, ob sich ein Objekt im Gefahrenbereich befindet oder nicht. Wird mit der Sicherheitssensoranordnung ein Objekt im Gefahrenbereich detektiert, wird durch das Schaltsignal der Sicherheitssensoranordnung eine Sicherheitsfunktion derart ausgelöst, dass die Anlage in einen sicheren Zustand überführt wird, so dass von dieser keine Gefahren mehr ausgehen können. Insbesondere wird die Anlage stillgesetzt.

Ein wesentlicher Vorteil der erfindungsgemäßen Sensoranordnung besteht darin, dass die Auswertung der Sensorsignale des oder der Sensoren mittels KI-Verarbeitungsalgorithmen erfolgt. Dadurch wird ein selbstlernendes Auswertesystem geschaffen, welches sich selbständig an bestimmte Randbedingungen anpasst. Damit wird eine hohe Zuverlässigkeit der Objektdetektionen auch bei sich ändernden Randbedingungen gewährleistet.

Ein weiterer wesentlicher Vorteil besteht darin, dass für jeden KI-Verarbeitungsalgorithmus durch die Fehlerkontrolle mittels den Testvektoren der oder jeder KI-Verarbeitungsalgorithmus abgesichert wird. Dadurch wird die Fehlersicherheit der Sensoranordnung insgesamt erhöht. Insbesondere können damit Sicherheitsanforderungen für einen Einsatz der Sensoranordnung als Sicherheitssensoranordnung im Bereich der Sicherheitstechnik erfüllt werden.

Mit der erfindungsgemäßen Fehlerkontrolle ist der oder jeder KI-Verarbeitungsalgorithmus gegen Verfälschungen durch bauteilbedingte Ausfälle oder gegen externe Einflüsse abgesichert, da durch den Vergleich der durch die Testvektoren generierten Ausgangsvektoren mit den Ergebnisvektoren derartige Fehler aufgedeckt werden, um dann entsprechende Gegenmaßnahmen einzuleiten.

Bauteilbedingte Ausfälle können Unterbrechungen von Bauelementen, Kurzschlüssen, Oszillationen in Bauelementen und dergleichen sein. Externe Einflüsse können elektrische Störungen wie induzierte Ströme, Über- oder Unterspannungen sein. Auch können externe Einflüsse Strahlungen, insbesondere radioaktive Strahlungen, Röntgenstrahlungen, HF-Strahlungen, kosmische Strahlungen, Teilchenstrahlungen oder dergleichen sein.

Insbesondere Fehler aufgrund von externen Einflüssen können nicht durch Speichertests aufgedeckt werden, da Speicher durch die externen Einflüsse momentane Fehlerzustände erfahren, aber grundsätzlich funktionsfähig bleiben.

Daher wird mit der erfindungsgemäßen Fehlerkontrolle eine erheblich verbesserte und erweiterte Aufdeckung von Fehlern ermöglicht.

Gemäß einer vorteilhaften Ausführungsform der Erfindung ist eine mehrkanalige Anordnung von Verarbeitungseinheiten mit jeweils einem KI-Verarbeitungsalgorithmus vorgesehen.

Dabei werden jedem Kanal Sensorsignale eines Sensors zugeführt.

Durch die mehrkanalige Auswertung wird eine weiter erhöhte Fehlersicherheit der Sensoranordnung erhalten.

Besonders vorteilhaft sind unterschiedliche Sensoren vorgesehen.

In diesem Fall sind die Eingabedaten für die einzelnen KI-Verarbeitungsalgorithmen diversitär, das heißt unterschiedlich und unabhängig voneinander.

Die KI-Verarbeitungsalgorithmen selbst können homogen, das heißt identisch ausgebildet sein. Alternativ sind die KI-Verarbeitungsalgorithmen der einzelnen Kanäle diversitär ausgebildet oder arbeiten mit diversitären Parametern.

Damit multiplizieren sich die einzelnen Fehlerwahrscheinlichkeiten der Auswertungen in den einzelnen KI-Verarbeitungsalgorithmen zu einer Gesamtfehlerwahrscheinlichkeit, mit der das Gesamtergebnis, das heißt das Ausgangssignal der Sensoranordnung generiert wird.

Dadurch lassen sich insbesondere Gesamtfehlerwahrscheinlichkeiten realisieren, die für einen Einsatz der Sensoranordnung als Sicherheitssensoranordnung im Bereich der Sicherheitstechnik gefordert werden.

Im Bereich der Sicherheitstechnik wird die Fehlersicherheit, die insbesondere die Sicherheitssensoranordnung bei der Generierung des Ausgangssignals erfüllen muss, durch das durch normative Anforderungen (insbesondere der Norm DIN EN 61508) bestimmte SIL (Sicherheitsintegritätslevel) bestimmt. Dieser hängt insbesondere von der Anforderungsrate dr ab, das heißt von der Rate pro Zeiteinheit, mit der eine Sicherheitsfunktion generiert werden muss.

Da bei der erfindungsgemäßen Sensoranordnung zur Signalauswertung KI-Algorithmen eingesetzt werden, die statische Auswerteverfahren darstellen, muss zur Erfüllung der Anforderungen für den Einsatz im Bereich der Sicherheitstechnik eine sehr kleine Gesamtfehlerwahrscheinlichkeit $P_{ges}$ gefordert werden, die typischerweise bei $P_{ges} < 10^{-7}$ liegt.

Wenn zur Signalauswertung mehrere KI-Verarbeitungsalgorithmen eingesetzt werden, welchen diversitäre unterschiedliche voneinander unabhängige Eingabedaten zugeführt werden, ergibt sich die Gesamtfehlerwahrscheinlichkeit aus dem Produkt der Einzelfehlerwahrscheinlichkeiten $p_i$ ($i = 1... N$, wobei N = Anzahl der KI-Verarbeitungsalgorithmen ist).

Bei einer Sensoranordnung mit zwei KI-Verarbeitungsalgorithmen ergibt sich die Gesamtfehlerwahrscheinlichkeit aus

$$P_{ges} = p_1 \cdot p_2$$

Unter der Voraussetzung, dass $p_1 = p_2 = p_e$ ist, ergibt sich für die Einzelfehlerwahrscheinlichkeit $p_e$

$$p_e = \sqrt{P_{ges}}$$

Dies bedeutet, dass für die einzelnen KI-Verarbeitungsalgorithmen erheblich kleinere Fehlerwahrscheinlichkeiten realisiert werden müssen, um die erforderliche Fehlersicherheit

$$F = 1 - P_{ges}$$

des Gesamtsystems zu realisieren. Diese erforderliche Fehlersicherheit, das heißt die Wahrscheinlichkeit, dass die Sensoranordnung ein korrektes Gesamtergebnis liefert, wird auch Vertrauensmaß genannt.

Vorteilhaft sind die KI-Verarbeitungsalgorithmen von neuronalen Netzen oder von Entscheidungsbäumen gebildet.

Die KI-Verarbeitungsalgorithmen und KI-Algorithmen sind in einer Rechnereinheit der Sensoranordnung als Softwaremodule implementiert.

Gemäß einer vorteilhaften Ausführungsform ist wenigstens eine Entscheidereinheit vorgesehen, in welcher abhängig von den Verarbeitungsergebnissen der KI-Verarbeitungsalgorithmen das Gesamtergebnis erzeugt ist.

Die oder jede Entscheidereinheit ist ebenfalls in Form von Softwaremodulen in der Rechnereinheit der Sensoranordnung implementiert.

Vorteilhaft werden in der Entscheidereinheit die Verarbeitungsergebnisse logisch verknüpft.

Weiterhin werden in der Entscheidereinheit die Verarbeitungsergebnisse miteinander verglichen.

Gemäß einer vorteilhaften Ausführungsform weist jeder Testvektor eine vorgegebene Anzahl von Testpattern auf.

Generell bilden die Testvektoren beziehungsweise Testpattern eine oder mehrere Einflussgrößen, die auf den oder die KI-Verarbeitungsalgorithmen einwirken. Insbesondere bilden Testvektoren Eingangsgrößen und/oder Zwischenergebnisse für den oder einen KI-Verarbeitungsalgorithmus.

Die Eingangsgrößen können beispielsweise synthetisch erzeugte Sensorsignale sein.

Prinzipiell kann die Fehlerkontrolle fortlaufend durchgeführt werden.

Besonders vorteilhaft erfolgt die Fehlerkontrolle eines KI-Verarbeitungsalgorithmus während vorgegebener Testzyklen.

Damit erfolgt die Fehlerkontrolle nicht fortlaufend, sondern nur während den diskreten Testzyklen.

In diesem Fall ist es besonders vorteilhaft, wenn während der Testzyklen Berechnungs-Paramter des KI-Verarbeitungsalgorithmus auf Testparameter umgeschaltet werden.

Die Testparameter sorgen für eine für die Fehlerkontrolle optimierte Ausbildung der KI-Verarbeitungsalgorithmen, wobei vorteilhaft die Testvektoren und die Testparamter aufeinander abgestimmt sind.

Vorteilhaft wird innerhalb eines Testzyklus der KI-Verarbeitungsalgorithmus in seiner Gesamtheit überprüft.

Alternativ können innerhalb von Testzyklen Teilprüfungen eines KI-Verarbeitungsalgorithmus durchgeführt werden.

Zweckmäßig ergänzen sich mehrere Teilprüfungen innerhalb aufeinanderfolgenden Testzyklen zu einer Gesamtprüfung des KI-Verarbeitungsalgorithmus. Vorteilhaft können bei einer mehrkanaligen Anordnung von KI-Verarbeitungsalgorithmen die Fehlerkontrollen für die KI-Verarbeitungsalgorithmen zeitlich versetzt erfolgen.

Insbesondere sind für die Kanäle zeitlich versetzte Testzyklen vorgesehen.

In diesem Fall ist es zweckmäßig, wenn Verarbeitungsergebnisse eines Kanals für die Dauer, innerhalb derer in diesem Kanal Fehlerkontrollen durchgeführt werden, bei der Berechnung des Gesamtergebnisses nicht berücksichtigt werden.

Damit beeinträchtigen die während den Testzyklen durchgeführten Fehlerkontrollen die Generierung des Gesamtergebnisses nicht.

Die Sensoren der erfindungsgemäßen Sensoranordnung sind vorteilhaft als messende Sensoren ausgebildet. Dabei kann ein Sensor prinzipiell als Radarsensor oder Ultraschallsensor ausgebildet sein.

Besonders vorteilhaft ist der oder jeder Sensor ein optischer Sensor.

Beispielsweise kann der optische Sensor als Flächendistanzsensor, das heißt scannender Distanzsensor ausgebildet sein. Weiterhin kann der Sensor als Kamerasensor ausgebildet sein, wobei besonders vorteilhaft dieser zur Durchführung von Distanzmessungen ausgebildet ist. Vorteilhaft erfolgen die Distanzmessungen nach einem Impuls-Laufzeit-Verfahren.

Gemäß einer vorteilhaften Weiterbildung ist der oder jeder KI-Verarbeitungsalgorithmus durch Signatur-Prüfungen abgesichert.

Die Erfindung wird im Folgenden anhand der Zeichnungen erläutert. Es zeigen:

Figur 1: Schematische Darstellung eines ersten Beispiels der erfindungsgemäßen Sensoranordnung.

Figur 2: Schematische Darstellung eines zweiten Beispiels der erfindungsgemäßen Sensoranordnung.

Figur 3: Beispiel eines Aufbaus der Sensoranordnung gemäß Figur 2.

Figur 4: Beispiel eines KI-Verarbeitungsalgorithmus in Form eines neuronalen Netzes.

Figur 5: Detaildarstellung des neuronalen Netzes gemäß Figur 4.

Figur 6: Beispiel einer Fehlerkontrolle für einen KI-Verarbeitungsalgorithmus.

Figur 7: Erstes Beispiel eines zeitlichen Ablaufs von Prüfungen für die Sensoranordnung gemäß Figur 3.

Figur 8: Zweites Beispiel eines zeitlichen Ablaufs von Prüfungen für die Sensoranordnung gemäß Figur 3.

Figur 9:  Drittes Beispiel eines zeitlichen Ablaufs von Prüfungen für die Sensoranordnung gemäß Figur 3.

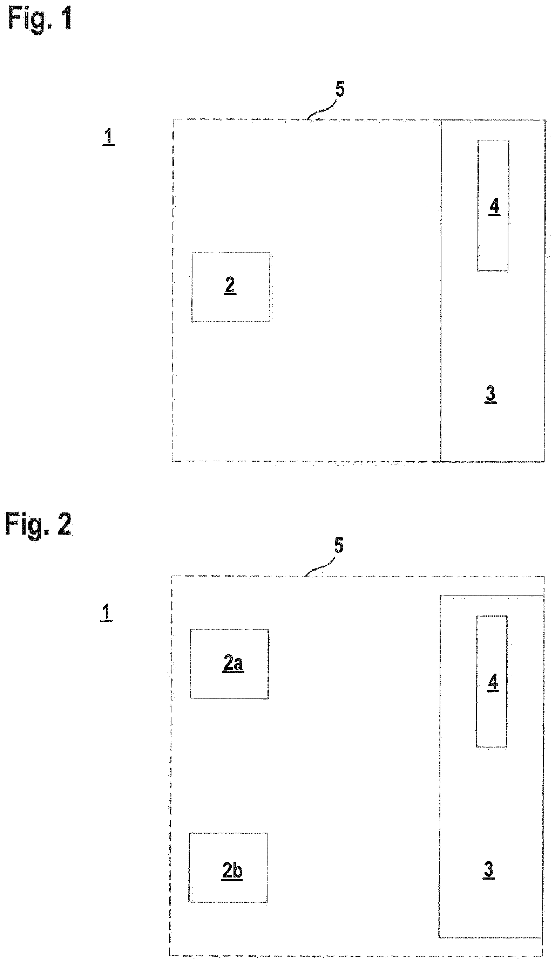

Figur 1 zeigt schematisch ein erstes Ausführungsbeispiel der erfindungsgemäßen Sensoranordnung 1. Diese Sensoranordnung 1 umfasst einen Sensor 2, der zur Absicherung einer Anlage 3 eingesetzt wird. Die Anlage 3 wird von einer Steuerung 4 gesteuert.

Figur 2 zeigt schematisch ein zweites Ausführungsbeispiel der erfindungsgemäßen Sensoranordnung 1. Diese Sensoranordnung 1 umfasst zwei Sensoren 2a, 2b, die zur Absicherung einer Anlage 3 eingesetzt werden. Generell können auch mehr als zwei Sensoren eingesetzt werden.

Die Sensoren 2, 2a, 2b der erfindungsgemäßen Sensoranordnung 1 sind vorteilhaft als messende Sensoren ausgebildet. Dabei kann ein Sensor 2, 2a, 2b prinzipiell als Radarsensor oder Ultraschallsensor ausgebildet sein.

Besonders vorteilhaft ist der oder jeder Sensor 2, 2a, 2b ein optischer Sensor.

Beispielsweise kann der optische Sensor als Flächendistanzsensor, das heißt scannender Distanzsensor ausgebildet sein. Weiterhin kann der Sensor 2, 2a, 2b als Kamerasensor ausgebildet sein, wobei besonders vorteilhaft dieser zur Durchführung von Distanzmessungen ausgebildet ist. Vorteilhaft erfolgen die Distanzmessungen nach einem Impuls-Laufzeit-Verfahren.

Die erfindungsgemäße Sensoranordnung 1 dient generell zur Erfassung von Objekten in einem Überwachungsbereich. Anhand der Sensorsignale des oder der Sensoren 2, 2a, 2b wird ein Ausgangssignal generiert, das generell eine Information über das Vorhandensein eines Objekts im Überwachungsbereich liefert. Dabei kann das Ausgangssignal ein binäres Schaltsignal sein, dessen Schaltzustände angeben, ob sich ein Objekt im Überwachungsbereich befindet oder nicht. Generell können als Ausgangssignale auch Distanz- oder Positionswerte ausgegeben werden.

Im vorliegenden Fall ist die Sensoranordnung 1 eine Sicherheitssensoranordnung, welche zur Überwachung eines Gefahrenbereichs 5 an der Anlage 3 ausgebildet ist. Die Funktion der Sicherheitssensoranordnung ist derart, dass diese bei Registrieren eines Objekteingriffs im Gefahrenbereich 5 als Ausgangssignal eine Sicherheitsfunktion für die Anlage 3 generiert.

Dabei generiert die Sicherheitssensoranordnung ein binäres Schaltsignal, dessen Schaltzustände angeben, ob sich ein Objekt im Gefahrenbereich 5 befindet oder nicht. Wird mit der Sicherheitssensoranordnung ein Objekt im Gefahrenbereich 5 detektiert, wird durch das Schaltsignal der Sicherheitssensoranordnung eine Sicherheitsfunktion derart ausgelöst, dass die Anlage 3 in einen sicheren Zustand überführt wird, so dass von dieser keine Gefahren mehr ausgehen können. Insbesondere wird die Anlage 3 stillgesetzt.

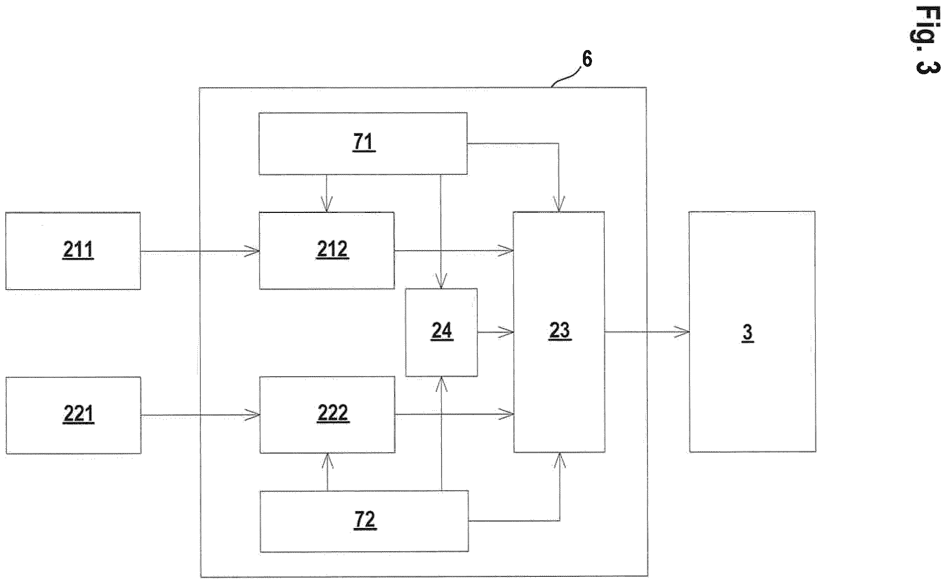

Figur 3 zeigt ein Aufbauschema für die Sensoranordnung 1 gemäß Figur 2. Die Sensoren 2a, 2b können unterschiedlich ausgebildet sein, vorzugsweise mit unterschiedlichen Sensortechnologien. Beispielsweise ist der erste Sensor 2a ein Flächendistanzsensor und der zweite Sensor 2b eine distanzmessende 3D-Kamera.

Als Auswerteeinheit ist den Sensoren 2a, 2b mit den Sensorsignalen 211 und 221 eine Rechnereinheit 6 zugeordnet.

Die einzelnen, in Figur 3 dargestellten Einheiten in der Rechnereinheit 6 sind von Software-Modulen gebildet.

Mit den Sensoren 2a, 2b werden unterschiedliche Sensorsignale 211 und 221 generiert, die voneinander unabhängige, diversitäre Eingabedaten für jeweils einen KI-Verarbeitungsalgorithmus 212, 222 in einer Verarbeitungseinheit bilden.

Die KI-Verarbeitungsalgorithmen 212, 222 sind von neuronalen Netzen 102 oder Entscheidungsbäumen gebildet.

In den KI-Verarbeitungsalgorithmen 212, 222 werden abhängig von den Eingabedaten Verarbeitungsergebnisse generiert, die einer gemeinsamen Entscheidereinheit 23 zugeführt werden. In einer Vergleichereinheit 24 werden die Verarbeitungsergebnisse miteinander verglichen und/oder logisch in einer Entscheidereinheit 23 verknüpft, wodurch als Gesamtergebnis das Schaltsignal für die Anlage 3 generiert wird.

Die KI-Verarbeitungsalgorithmen 212, 222 bilden eine zweikanalige Anordnung zur Auswertung von Sensorsignalen der Sensoren. Die Kanäle können homogen ausgebildet sein, das heißt die KI-Verarbeitungsalgorithmen 212, 222 sind dann identisch ausgebildet.

Alternativ sind diversitär ausgebildete Kanäle vorgesehen. In diesem Fall können diversitäre KI-Verarbeitungsalgorithmen 212, 222 oder mit diversitären Berechnungs-Parametern versehene KI-Verarbeitungsalgorithmen vorgesehen sein.

Nur bei homogenen Kanälen sind Quervergleiche zwischen diesen Kanälen möglich.

Jedem KI-Verarbeitungsalgorithmus 212, 222 ist eine Testeinheit 71, 72 zugeordnet.

Mit den Testeinheiten 71, 72 erfolgt eine Fehlerkontrolle der KI-Verarbeitungsalgorithmen 212, 222. Wird mit der Fehlerkontrolle ein Fehler in einer der KI-Verarbeitungsalgorithmen 212, 222 aufgedeckt, wird eine Fehlermeldung generiert.

Hierzu ist jede Testeinheit 71, 72 mit der zugeordneten Verarbeitungseinheit mit dem jeweiligen KI-Verarbeitungsalgorithmus 212, 222 verbunden. Zudem sind die Testeinheiten 71, 72 mit der Entscheidereinheit 23 verbunden.

Erfindungsgemäß generieren die Testeinheiten 71, 72 Testvektoren, die den jeweiligen KI-Verarbeitungsalgorithmen 212, 222 zugeführt werden. Anhand der Testvektoren erfolgt eine Fehlerkontrolle der KI-Verarbeitungsalgorithmen 212, 222 derart, dass in einem Testbetrieb der Sensoranordnung 1 die KI-Verarbeitungsalgorithmen 212, 222 anhand der Testvektoren Ausgangsvektoren generieren, die mit Ergebnisvektoren als Sollwertgrößen verglichen werden. Die Ergebnisvektoren sind in einem Speicher der Rechnereinheit 6 gespeichert und können beispielsweise durch Einlernvorgänge ermittelt werden. Stimmen die Ausgangsvektoren mit den Ergebnisvektoren überein, liegt ein fehlerfreier Betrieb der KI-Verarbeitungsalgorithmen 212, 222 vor. Stimmen die Ausgangsvektoren mit den Ergebnisvektoren nicht überein, liegt im jeweiligen KI-Verarbeitungsalgorithmus 212, 222 ein Fehler vor, so dass eine Fehlermeldung generiert wird.

Vorteilhaft erfolgt während des Testbetriebs über die Testeinheiten 71, 72 ein Umschalten der KI-Verarbeitungsalgorithmen 212, 222 auf Testparameter, so dass diese für den Testbetrieb optional angepasst sind.

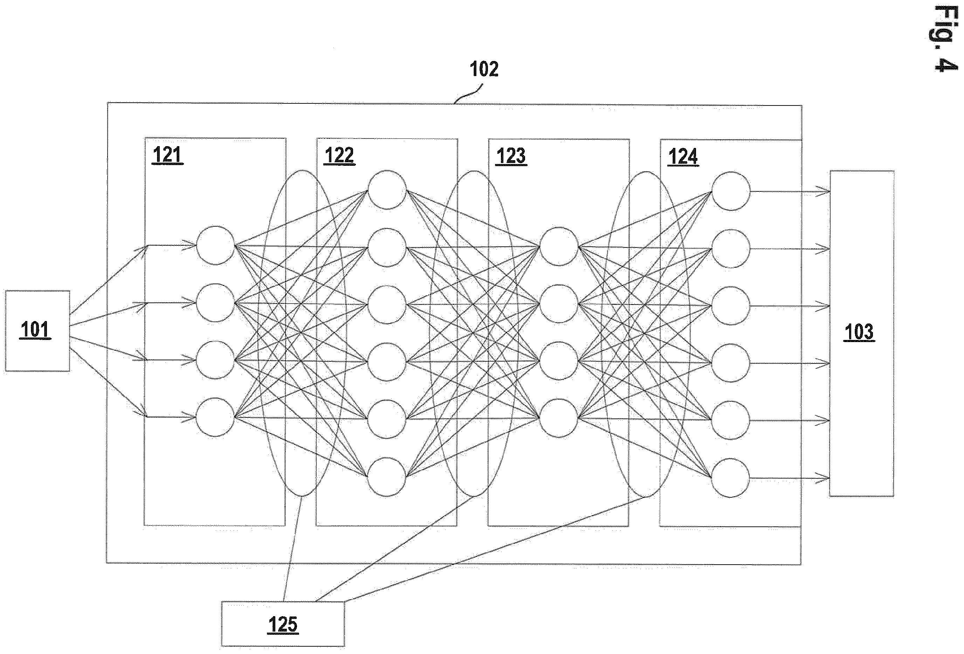

Figur 4 zeigt schematisch den Aufbau eines neuronalen Netztes 102.

Das neuronale Netz 102 umfasst im vorliegenden Fall eine Eingangsschicht 121, zwei Zwischenschichten 122, 123 und eine Ausgangsschicht 124.

Die Eingangsschicht 121 dient zur Aufnahme von Eingangsgrößen 101, die von Sensorsignalen eines der Sensoren 2, 2a, 2b gebildet sind.

Die Eingangsgrößen 101 werden in der Eingangsschicht 121 zu Zwischengrößen, die in Zwischenschichten 122, 123 weiterverarbeitet werden und dann der Ausgangsschicht 124 zugeführt werden, wo Ausgangsgrößen 103 generiert und ausgegeben werden, die die Verarbeitungsergebnisse der KI-Verarbeitungsalgorithmen 212, 222 bilden.

Die in Figur 4 dargestellten Verknüpfungen 125 können durch Training optimiert werden.

In den einzelnen Schichten des neuronalen Netzes 102 können folgende Bearbeitungsfunktionen realisiert sein:

Filterfunktionen (Frequenzgang)
und/oder Funktionszusammenhänge (Kennlinien, auch nichtlinear)
und/oder Übertragungsfunktionen (Frequenz und Kennlinie)
und/oder Entscheidungsmatrizen
und/oder Neuronale Vernetzungen, insbesondere mit Verknüpfungen 125.

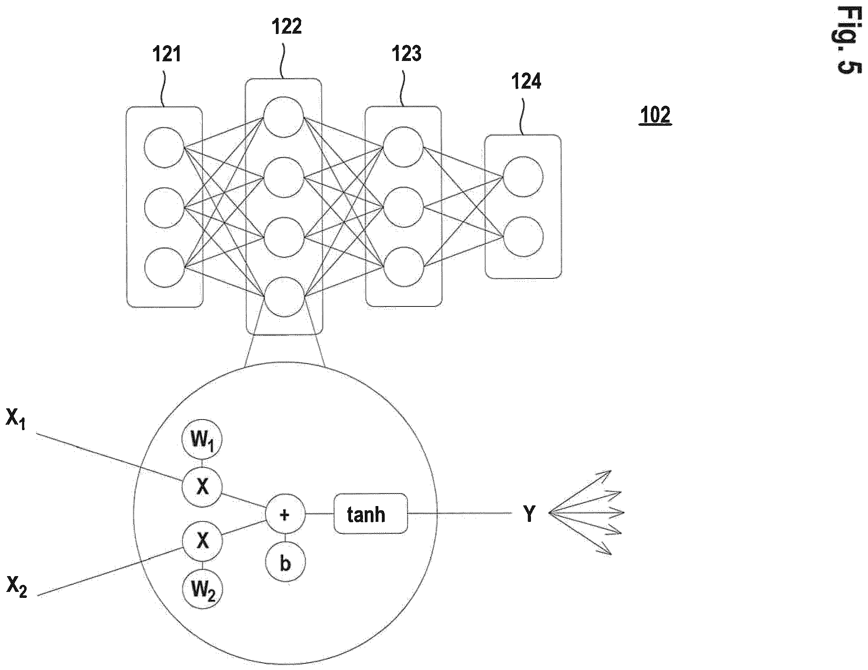

Figur 5 zeigt eine detaillierte Darstellung eines neuronalen Netzes 102 gemäß Figur 4.

Bei diesem neuronalen Netz 102 sind alle Neuronen einer Schicht mit jedem Neuron der nachfolgenden Schicht verknüpft. Die Eingangssignale $x_n$ eines Neurons werden gewichtet ($w_n$) und aufsummiert. Zusätzlich wird ein weiteres Gewicht ($b$) addiert. Zum Abschluss wird das Zwischenergebnis einer Transferfunktion (Aktivierungsfunktion) $f(z)$ unterworfen, um das Ausgangssignal $y$ des Neurons zu erhalten.

Dabei sind:

$x_1$, $x_2$     Eingangsgrößen einer Einzelfunktion/eines Neurons

$w_1$, $w_2$, $b$     Gewichtungswerte

$y$     Ausgangsgröße(n) einer Einzelfunktion/eines Neurons mit Transferfunktion $f(z)$ Zum Beispiel: $f(z) = \tanh(z)$ ReLU

$$f(z) = \begin{cases} xz & \text{für } z \geq 0 \\ 0 & \text{sonst} \end{cases}'$$ lineare Funktion $f(z) = a \cdot z + c$ Sigmoid

$$f(z) = \frac{1}{1+e^{-z'}}$$

Durch Variation von Verknüpfungen 125 und Gewichtungen kann das neuronale Netz 102 trainiert (Optimierung der Verknüpfungen 125 und Parameter) werden, indem Ergebnisse für viele Eingangsvariationen geprüft/bewertet werden. Daraus ergeben sich für jeden Knoten des neuronalen Netzes 102 Parameter. Im vorliegenden Beispiel die Gewichtungswerte $wj$, $s$, $i$, $wjs$. $i$, $bs$, $i$ je Knotenverbindung, im Layer $s$ und innerhalb jedes Layer $s$ die Elemente $i$.

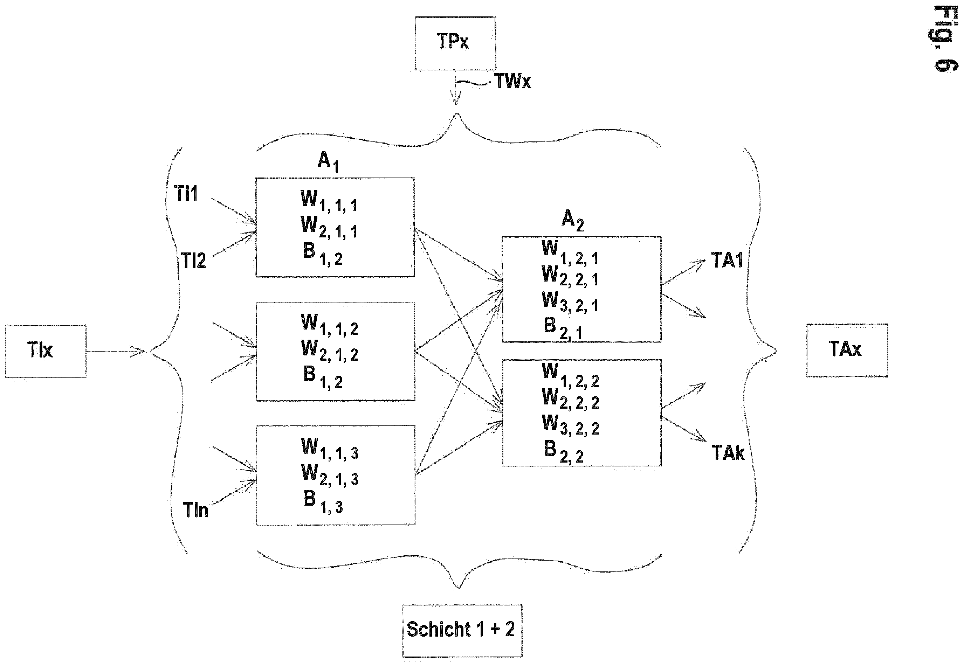

Ein Beispiel für die erfindungsgemäße Fehlerkontrolle zeigt Figur 6. Dort ist als Teil eines neuronalen Netzes 102 ein Inferenz-Subsystem mit 2 Algorithmus-Schichten $A_1$, $A_2$ dargestellt.

Dabei sind $W_{x,y,z}$ und $B_{x,y}$ die Wichtungsparameter der Algorithmusschichten, wobei die Indizes $x$, $y$, $z$ folgende Bedeutungen haben:

$x$    Eingang
$y$    Schicht
$z$    Knoten

Die Wichtungsparameter werden durch ein Training optimiert.

Um die Algorithmen eines KI-Verarbeitungsalgorithmus 212, 222 zu testen und eventuelle Logikfehler aufzudecken oder um Speicherfehler der Parameter der KI-Verarbeitungsalgorithmen 212, 222 aufzudecken, wird erfindungsgemäß eine Fehlerkontrolle durchgeführt, bei der Testvektoren (TI1...TIn) dem jeweiligen KI-Verarbeitungsalgorithmus 212, 222 zugeführt werden, wobei die Testvektoren in einer Quelle TIx erzeugt werden.

Zudem werden in einer Quelle TPx Testparameter TWx erzeugt, mit denen der KI-Verarbeitungsalgorithmus 212, 222 in einem Testbetrieb betrieben wird.

Durch die Testvektoren und den Betrieb mit den Testparametern erzeugt der KI-Verarbeitungsalgorithmus 212, 222 in einem Testbetrieb Ausgangsvektoren TA1... TAk. Diese Ausgangsvektoren werden mit vorgegebenen, abgespeicherten Ergebnisvektoren TAx verglichen, die Sollwerte bilden. Nur wenn die Ausgangsvektoren mit den Ergebnisvektoren übereinstimmen, liegt ein fehlerfreier Betrieb vor.

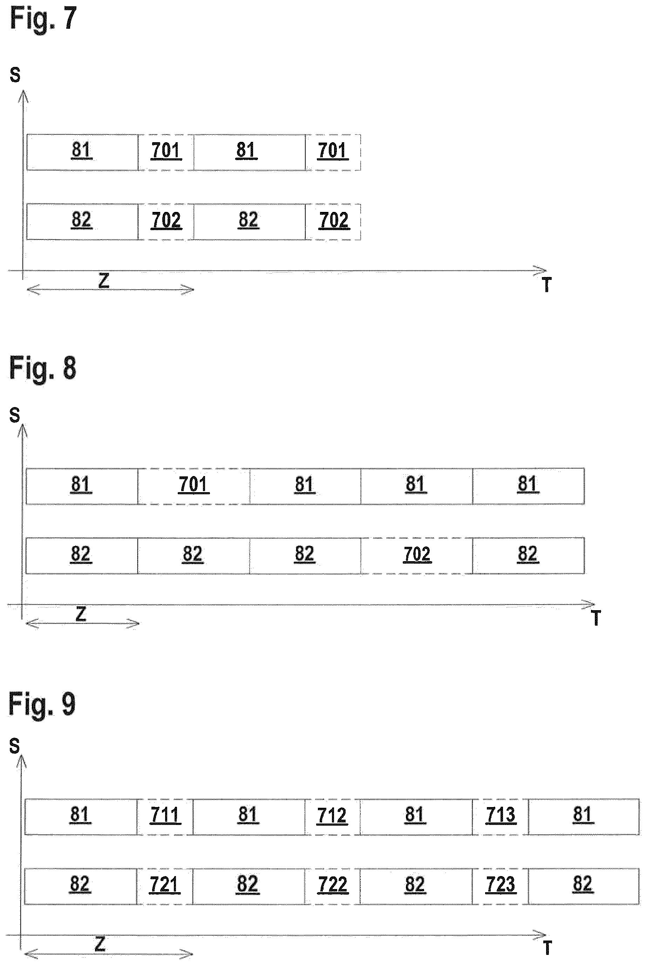

Die Figuren 7 bis 9 zeigen beispielhafte Zeitabläufe von Signalen S bei der Sensoranordnung 1 gemäß Figur 3.

Dabei ist in den Figuren 7 bis 9 mit Z der Systemzyklus der beiden Kanäle mit den KI-Verarbeitungsalgorithmen 212, 222 bezeichnet. Jeweils die obere Reihe in den Figuren 7 bis 9 zeigt Signale des Kanals A zur Auswertung der Sensorsignale des Sensors 2a. Jeweils die untere Reihe in den Figuren 7 bis 9 zeigt die Signale des Kanals B zur Auswertung der Sensorsignale des Sensors 2b.

In den Figuren 7 bis 9 sind mit der Bezugsziffer 81 Inferenz-Zyklen, das heißt Bearbeitungszyklen des KI-Verarbeitungsalgorithmus 212 in Kanal A bezeichnet. Mit der Bezugsziffer 82 sind Inferenz-Zyklen des KI-Verarbeitungsalgorithmus 222 im Kanal B bezeichnet.

In den Figuren 7 und 8 sind mit den Bezugsziffern 701 und 702 Testzyklen bezeichnet, in welchen der KI-Verarbeitungsalgorithmus 212 beziehungsweise 222 in seiner Gesamtheit anhand von Signaturen überprüft werden.

Bei dem Beispiel gemäß Figur 7 laufen die Fehlerkontrollen in den Testzyklen 701, 702 zeitlich parallel ab.

In dem Beispiel gemäß Figur 8 sind die Testzyklen 701, 702 zeitlich versetzt.

Wenn im jeweils anderen Kanal Fehlerkontrollen durchgeführt werden, werden die Ergebnisse des Inferenz-Zyklus 81 beziehungsweise 82 des anderen Kanals in der Vergleichereinheit 24 durch die Entscheidereinheit 23 alleine zur Generierung des Gesamtergebnisses herangezogen, das heißt dann erfolgt in der Vergleichereinheit 24 oder in der Entscheidereinheit 23 kein Vergleich oder eine geänderte Entscheidung auf Basis der Vergleichereinheit 24.

Bei dem Beispiel gemäß Figur 9 verlaufen die Fehlerkontrollen in den Kanälen A und B wieder parallel.

Bei dem Beispiel gemäß Figur 9 erfolgen mittels Testzyklen 711, 712, 713 Überprüfungen von Teilsystemen des KI-Verarbeitungsalgorithmus 212, wobei sich diese zu einer Gesamttestung des KI-Verarbeitungsalgorithmus 212 ergänzen. Entsprechend erfolgen in Testzyklen 721, 722 ,723 Überprüfungen von Teilsystemen des KI-Verarbeitungsalgorithmus 222, wobei sich diese zu einer Gesamttestung des KI-Verarbeitungsalgorithmus 222 ergänzen.

B ezugszei chenli ste

| (1) | Sensoranordnung |
|---|---|
| (2) | Sensor |
| (2a, b) | Sensor |
| (3) | Anlage |
| (4) | Steuerung |
| (5) | Gefahrenbereich |
| (6) | Rechnereinheit |
| (23) | Entscheidereinheit |
| (24) | Vergleichereinheit |
| (71) | Testeinheit |
| (72) | Testeinheit |
| (81) | Inferenz-Zyklus |
| (82) | Inferenz-Zyklus |
| (101) | Eingangsgröße |
| (102) | Neuronales Netz |
| (103) | Ausgangsgröße |
| (121) | Eingangsschicht |
| (122) | Zwischenschicht |
| (123) | Zwischenschicht |
| (124) | Ausgangsschicht |
| (125) | Verknüpfungen |
| (211) | Sensorsignal |
| (212) | KI-Verarbeitungsalgorithmus |
| (221) | Sensorsignal |
| (222) | KI-Verarbeitungsalgorithmus |
| (701) | Testzyklus |
| (702) | Testzyklus |
| (711) | Testzyklus |
| (712) | Testzyklus |
| (713) | Testzyklus |
| (721) | Testzyklus |
| (722) | Testzyklus |
| (723) | Testzyklus |

**Patentansprüche**

1. Sensoranordnung (1) mit wenigstens einem Sensor (2) zur Erfassung von Objekten in einem Überwachungsbereich, wobei Sensorsignale des wenigstens einen Sensors (2) wenigstens einer Verarbeitungseinheit mit einem KI(Künstliche Intelligenz)-Verarbeitungsalgorithmus (212, 222) zugeführt sind, und wobei aus in der Verarbeitungseinheit generierten Verarbeitungsergebnissen als Gesamtergebnis ein Ausgangssignal der Sensoranordnung (1) generiert wird, **dadurch gekennzeichnet, dass** dem KI(Künstliche Intelligenz)-Verarbeitungsalgorithmus (212, 222) Testvektoren zugeführt werden, wodurch der KI(Künstliche Intelligenz)-Verarbeitungsalgorithmus (212, 222) Ausgangsvektoren generiert, welche mit vorgegebenen Ergebnisvektoren verglichen werden.

2. Sensoranordnung (1) nach Anspruch 1, **dadurch gekennzeichnet, dass** diese eine Sicherheitssensoranordnung ist, welche zur Überwachung eines Gefahrenbereichs (5) an einer Anlage (3) ausgebildet ist.

3. Sensoranordnung (1) nach Anspruch 2, **dadurch gekennzeichnet, dass** diese bei Registrieren eines Objekteingriffs im Gefahrenbereich (5) als Ausgangssignal eine Sicherheitsfunktion für die Anlage (3) generiert.

4. Sensoranordnung (1) nach einem der Ansprüche 1 bis 3, **dadurch gekennzeichnet, dass** eine mehrkanalige Anordnung von Verarbeitungseinheiten mit jeweils einem KI-Verarbeitungsalgorithmus (212, 222) vorgesehen ist.

5. Sensoranordnung (1) nach Anspruch 4, **dadurch gekennzeichnet, dass** jedem Kanal Sensorsignale eines Sensors (2, 2a, 2b) zugeführt werden.

6. Sensoranordnung (1) nach Anspruch 5, **dadurch gekennzeichnet, dass** unterschiedliche Sensoren (2, 2a, 2b) vorgesehen sind.

7. Sensoranordnung (1) nach einem der Ansprüche 4 bis 6, **dadurch gekennzeichnet, dass** aus Verarbeitungsergebnissen der KI-Verarbeitungsalgorithmen (212, 222) der Verarbeitungseinheit das Gesamtergebnis generiert wird.

8. Sensoranordnung (1) nach einem der Ansprüche 4 bis 7, **dadurch gekennzeichnet, dass** wenigstens eine Entscheidereinheit (23) vorgesehen ist, in welcher abhängig von den Verarbeitungsergebnissen der KI-Verarbeitungsalgorithmen (212, 222) das Gesamtergebnis erzeugt ist.

9. Sensoranordnung (1) nach Anspruch 7, **dadurch gekennzeichnet, dass** in der Entscheidereinheit (23) die Verarbeitungsergebnisse logisch verknüpft werden.

10. Sensoranordnung (1) nach Anspruch 8 oder 9, **dadurch gekennzeichnet, dass** in der Entscheidereinheit (23) die Verarbeitungsergebnisse miteinander verglichen werden.

11. Sensoranordnung (1) nach einem der Ansprüche 1 bis 10, **dadurch gekennzeichnet, dass** jeder Testvektor eine vorgegebene Anzahl von Testpattern aufweist.

12. Sensoranordnung (1) nach einem der Ansprüche 1 bis 11, **dadurch gekennzeichnet, dass** Testvektoren Eingangsgrößen und/oder Zwischenergebnisse für den oder einen KI-Verarbeitungsalgorithmus (212, 222) bilden.

13. Sensoranordnung (1) nach einem der Ansprüche 1 bis 12, **dadurch gekennzeichnet, dass** die Fehlerkontrolle eines KI-Verarbeitungsalgorithmus (212, 222) während vorgegebener Testzyklen (701, 702, 711...713, 721 ... 723) erfolgt.

14. Sensoranordnung (1) nach Anspruch 13, **dadurch gekennzeichnet, dass** während der Testzyklen (701, 702, 711...713, 721...723) Berechnungs-Paramter des KI-Verarbeitungsalgorithmus (212, 222) auf Testparameter umgeschaltet werden.

15. Sensoranordnung (1) nach einem der Ansprüche 13 oder 14, **dadurch gekennzeichnet, dass** innerhalb eines Testzyklus (701, 702, 711...713, 721... 723) der KI-Verarbeitungsalgorithmus (212, 222) in seiner Gesamtheit überprüft wird.

16. Sensoranordnung (1) nach einem der Ansprüche 13 oder 14, **dadurch gekennzeichnet, dass** innerhalb von Testzyklen (701, 702, 711 ... 713, 721 ... 723) Teilprüfungen eines KI-Verarbeitungsalgorithmus (212, 222) durchgeführt werden.

17. Sensoranordnung (1) nach Anspruch 16, **dadurch gekennzeichnet, dass** sich mehrere Teilprüfungen innerhalb aufeinanderfolgenden Testzyklen (701, 702, 711...713, 721...723) zu einer Gesamtprüfung des KI-Verarbeitungsalgorithmus (212, 222) ergänzen.

18. Sensoranordnung (1) nach einem der Ansprüche 4 bis 17, **dadurch gekennzeichnet, dass** bei einer mehrkanaligen Anordnung von KI-Verarbeitungsalgorithmen (212, 222) die Fehlerkontrollen für die KI-Verarbeitungsalgorithmen (212, 222) zeitlich versetzt erfolgen.

19. Sensoranordnung (1) nach Anspruch 18, **dadurch gekennzeichnet, dass** für die Kanäle zeitlich versetzte Testzyklen (701, 702, 711...713, 721...723) vorgesehen sind.

20. Sensoranordnung (1) nach einem der Ansprüche 18 oder 19, **dadurch gekennzeichnet, dass** Verarbeitungsergebnisse eines Kanals für die Dauer, innerhalb derer in diesem Kanal Fehlerkontrollen durchgeführt werden, bei der Berechnung des Gesamtergebnisses nicht berücksichtigt werden.

21. Sensoranordnung (1) nach einem der Ansprüche 4 bis 18, **dadurch gekennzeichnet, dass** die KI-Verarbeitungsalgorithmen (212, 222) der einzelnen Kanäle diversitär ausgebildet sind oder mit diversitären Parametern arbeiten.

22. Sensoranordnung (1) nach einem der Ansprüche 1 bis 21, **dadurch gekennzeichnet, dass** Sensoren (2, 2a, 2b) in Form von Radarsensoren, Ultraschallsensoren oder optischen Sensoren vorgesehen sind.

23. Sensoranordnung (1) nach einem der Ansprüche 1 bis 22, **dadurch gekennzeichnet, dass** Sensoren (2, 2a, 2b) in Form von Kamerasensoren oder Flächendistanzsensoren ausgebildet sind.

24. Sensoranordnung (1) nach einem der Ansprüche 1 bis 23, **dadurch gekennzeichnet, dass** der oder jeder KI-Verarbeitungsalgorithmus (212, 222) durch Signatur-Prüfungen abgesichert ist.

25. Verfahren zum Betrieb einer Sensoranordnung (1) mit wenigstens einem Sensor (2) zur Erfassung von Objekten in einem Überwachungsbereich, wobei Sensorsignale des wenigstens einen Sensors (2) wenigstens einer Verarbeitungseinheit mit einem KI(Künstliche Intelligenz)-Verarbeitungsalgorithmus (212, 222) zugeführt sind, und wobei aus in der Verarbeitungseinheit generierten Verarbeitungsergebnissen als Gesamtergebnis ein Ausgangssignal der Sensoranordnung (1) generiert wird, **dadurch gekennzeichnet, dass** dem KI-Verarbeitungsalgorithmus (212, 222) Testvektoren zugeführt werden, wodurch der KI-Verarbeitungsalgorithmus (212, 222) Ausgangsvektoren generiert, welche mit vorgegebenen Ergebnisvektoren verglichen werden.

## Fig. 1

## Fig. 2

# Fig. 3

Fig. 4

# Fig. 5

Fig. 6

EP 4 098 929 A1

## Fig. 7

S

| 81 | 701 | 81 | 701 |
| --- | --- | --- | --- |

| 82 | 702 | 82 | 702 |
| --- | --- | --- | --- |

Z

T

## Fig. 8

S

| 81 | 701 | 81 | 81 | 81 |
| --- | --- | --- | --- | --- |

| 82 | 82 | 82 | 702 | 82 |
| --- | --- | --- | --- | --- |

Z

T

## Fig. 9

S

| 81 | 711 | 81 | 712 | 81 | 713 | 81 |
| --- | --- | --- | --- | --- | --- | --- |

| 82 | 721 | 82 | 722 | 82 | 723 | 82 |
| --- | --- | --- | --- | --- | --- | --- |

Z

T

15

EP 4 098 929 A1

Europäisches
Patentamt
European
Patent Office
Office européen
des brevets

**EUROPÄISCHER RECHERCHENBERICHT**

Nummer der Anmeldung

EP 21 17 7334

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2021/084231 A1 (TRIPLE LIDAR TECH LTD [GB]) 6. Mai 2021 (2021-05-06) * Seite 4, Zeile 11 - Zeile 31 * * Seite 7, Zeile 3 - Zeile 20 * * Seite 7, Zeile 37 - Zeile 42 * * Seite 9, Zeile 12 - Zeile 23 * * Seite 11, Zeile 54 - Seite 12, Zeile 34 * ----- | 1-25 | INV. F16P3/14 |
| A | DE 10 2005 063217 A1 (PILZ GMBH & CO KG) 5. Juli 2007 (2007-07-05) * Absatz [0089] * ----- | 24 | |
| A | DE 20 2019 105918 U1 (SICK AG [DE]) 26. Januar 2021 (2021-01-26) * Absatz [0073] - Absatz [0077] * ----- | 1-25 | |

RECHERCHIERTE SACHGEBIETE (IPC)

F16P

Der vorliegende Recherchenbericht wurde für alle Patentansprüche erstellt

| Recherchenort | Abschlußdatum der Recherche | Prüfer |
|---|---|---|
| Den Haag | 19. Oktober 2021 | Terrier de la Chaise |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 17 7334

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-10-2021

| Im Recherchenbericht angeführtes Patentdokument | Datum der Veröffentlichung | Mitglied(er) der Patentfamilie | Datum der Veröffentlichung |
|---|---|---|---|
| WO 2021084231 A1 | 06-05-2021 | GB 2588650 A<br>WO 2021084231 A1 | 05-05-2021<br>06-05-2021 |
| DE 102005063217 A1 | 05-07-2007 | CN 101346744 A<br>DE 102005063217 A1<br>EP 1964063 A2<br>JP 4990291 B2<br>JP 2009521022 A<br>US 2009015663 A1<br>US 2015377413 A1<br>WO 2007079883 A2 | 14-01-2009<br>05-07-2007<br>03-09-2008<br>01-08-2012<br>28-05-2009<br>15-01-2009<br>31-12-2015<br>19-07-2007 |
| DE 202019105918 U1 | 26-01-2021 | KEINE | |

EPO FORM P0461

Für nähere Einzelheiten zu diesem Anhang : siehe Amtsblatt des Europäischen Patentamts, Nr.12/82